# EUROPÄISCHE PATENTSCHRIFT

(11) **EP 2 730 665 B1**
(45) Veröffentlichungstag und Bekanntmachung des Hinweises auf die Patenterteilung: **14.06.2017**
(21) Anmeldenummer: 13184929.1
(22) Anmeldetag: 18.09.2013
(51) Int. Cl.: B21D 22/02, C21D 1/34, C22C 38/02, C22C 38/04, C22C 38/06, C22C 38/12, C21D 1/18, C21D 8/00, C21D 9/46, C22C 38/00, C22C 38/14, C21D 1/673

(54) **Warmformlinie sowie Verfahren zur Herstellung eines warmumgeformten und pressgehärteten Kraftfahrzeugbauteils**
Thermoforming line and method for producing a thermoformed and press-hardened motor vehicle component
Ligne moulée à chaud et procédé de fabrication d'un composant de véhicule automobile déformé à chaud et durci à la presse

(30) Priorität: 07.11.2012 DE 102012110649
(43) Veröffentlichungstag der Anmeldung: 14.05.2014
(60) Teilanmeldung: 15184535.1
(73) Patentinhaber: Benteler Automobiltechnik GmbH, 33102 Paderborn (DE)
(72) Erfinder: Trippe, Carsten, 33154 Salzkotten (DE); Wulfes, Dieter, 33178 Borchen (DE); Adelbert, Stefan, 33129 Delbrück (DE); Danger, Elisabeth, 33100 Paderborn (DE)
(74) Vertreter: Griepenstroh, Jörg

(56) Entgegenhaltungen:
- EP-A1- 2 014 777
- EP-A1- 2 182 081
- EP-A1- 2 182 082
- DE-B3-102010 004 081
- DE-B3-102010 048 209

## Beschreibung

Die vorliegende Erfindung betrifft eine Warmformlinie zur Herstellung warmumgeformter und pressgehärteter Stahlblechprodukte gemäß den Merkmalen im Oberbegriff von Patentanspruch 1.

Aus dem Stand der Technik ist es bekannt, Kraftfahrzeugkarosserien aus metallischen Werkstoffen herzustellen. Hierzu werden insbesondere Stahlwerkstoffe oder aber auch Leichtmetallwerkstoffe eingesetzt. Innerhalb der letzten Jahre wurden im Bereich der Stahlwerkstoffe hochfeste und höchstfeste Stähle eingesetzt, die zumindest partiell hohe Härten oder aber duktile Eigenschaften aufweisen, so dass die Festigkeit und auch die Crashperfomance einer Kraftfahrzeugkarosserie gesteigert wird, bei gleichzeitiger Gewichtseinsparung.

So ist beispielsweise aus der DE 10 2010 004 081 B3 ein Vergütungsverfahren zum Herstellen von Stahlblechplatinen mit mindestens zwei Gefügebereichen unterschiedlicher Duktilität bekannt. Hierzu wird eine Platine zunächst in einem Ofen auf eine Temperatur homogen erwärmt und anschließend in einer Heizstation in zumindest Teilbereichen weiter auf eine Temperatur oberhalb der Austenitisierungstemperatur (AC3) erwärmt. Die Platine wird im Anschluss daran formgepresst und durch Abschrecken gehärtet.

Aus der DE 10 2010 048 209 B3 ist ein Verfahren zur Herstellung eines warmumgeformten und pressgehärteten Metallbauteils bekannt, wobei das Bauteil als Kraftfahrzeugstrukturbauteil mit verschiedener Festigkeit hergestellt wird. Hierzu ist ein Zwischenkühlschritt vorgesehen, bei dem eine zunächst vollständig auf über Austenitisierungstemperatur erwärmte Blechpatine in einem ersten Bereich zwischengekühlt wird. Die Zwischenkühlung kann direkt in dem Pressenwerkzeug stattfinden. Hierzu ist jedoch zunächst aufgrund der homogenen Erwärmung der gesamten Platine ein zunächst immer hoher Energieeintrag notwendig, wobei ein Zwischenkühlen auch in dem Pressenwerkzeug gerade aus energetischen Aspekten mitunter nur suboptimal betrieben werden kann.Aus der EP 2 182 082 A1 und aus der EP 2 182 081 A1 sind Warmformlinien mit einer Temperierstation bekannt, wobei die Temperierstation ein Werkstück mittels Kontakterwärmung oder Kontaktkühlung temperiert. Hierbei ist vorteilig der gezielte Energieeinsatz aus Wärmeenergie oder Kühlleistung zur Temperierung des Bauteils. Einhergehend damit sind jedoch hohe Anschaffungskosten, da eine solche Kontakttemperierstation nicht vielseitig für verschiedene Produktbauteile einsetzbar ist.

Die Aufgabe der vorliegenden Erfindung ist es, ausgehend vom Stand der Technik ein Verfahren sowie eine Vorrichtung aufzuzeigen, mit der es möglich ist, Blechbauteile mit partiell voneinander verschiedenen Festigkeitseigenschaften mit geringem Energiebedarf herzustellen, wobei die Anschaffungskosten für eine Vorrichtung ebenfalls gering ausfallen sollen.

Die zuvor genannte Aufgabe wird erfindungsgemäß mit einer Warmformlinie zur Herstellung warmumgeformter und pressgehärteter Stahlblechprodukte gemäß den Merkmalen im Patentanspruch 1 gelöst.

Vorteilhafte Ausführungsvarianten der vorliegenden Erfindung sind Bestandteil der abhängigen Patentansprüche.

Die erfindungsgemäße Warmformlinie zur Herstellung warmumgeformter und pressgehärteter Stahlblechprodukte, insbesondere zur Herstellung von Kraftfahrzeugbauteilen weist eine Erwärmungsvorrichtung und eine Umformvorrichtung auf, wobei die Erwärmungsvorrichtung wiederum eine Temperierstation mit einem Oberwerkzeug und einem Unterwerkzeug aufweist. Die Temperierstation ist erfindungsgemäß dadurch gekennzeichnet, dass sie mindestens eine Temperierquelle zum Kühlen oder Heizen aufweist und an dem Oberwerkzeug oder dem Unterwerkzeug austauschbare Temperierplatten zur konduktiven Temperierung angeordnet sind, wobei die Temperierplatten durch die Temperierquelle erwärmbar oder kühlbar sind.

Mit dem erfindungsgemäßen Temperierwerkzeug ist es somit möglich, in energetisch sinnvoller Weise die in der Warmformlinie zu bearbeitenden Blechplatinen und/oder Blechbauteile entsprechend zu temperieren. Dabei kann das Temperieren beispielsweise ein Heizen, insbesondere ein Heizen oder aber Erwärmen auf über AC3 Temperatur, sein oder aber auch ein Kühlen bzw. Abschrecken. Im Rahmen der Erfindung ist es aufgrund der austauschbaren Temperierplatten möglich, sowohl Blechplatinen, mithin flächige Bauteile, als auch bereits dreidimensional vorgeformte oder aber endgeformte Bauteile konduktiv zu erwärmen. Bei der konduktiven Erwärmung ist der Anteil der Verlustwärme besonders gering, da im Wesentlichen ein Wärmeübergang aufgrund von Wärmeleitung über die Temperierplatte an die zu erwärmende Platine oder aber das zu erwärmende Bauteil erfolgt. Abstrahlende Wärme oder aber mit erwärmte Heizräume werden gänzlich vermieden. Die Temperierquelle, insbesondere Heizquelle, erwärmt somit die Temperierplatte, wobei die Temperierplatte durch Einlegen einer Blechplatine oder aber eines Bauteils in die Temperiervorrichtung und Schließen der Temperiervorrichtung mit der Platine oder aber dem Bauteil formschlüssig zum Anlagenkontakt mit unterer und/oder oberer Temperierplatte kommt, und somit konduktiv die Platine oder aber das Bauteil erwärmt. Im Rahmen der Erfindung ist auch ein nur einseitiger Kontakt möglich.

Ein weiterer wesentlicher Vorteil der vorliegenden Erfindung ist, dass insbesondere die hohen Erstanschaffungskosten des Werkzeuges mit entsprechenden Temperiervorrichtungen sowie entsprechender Schließmechanik zunächst nur einmalig anfallen und im Anschluss daran die Temperiervorrichtung vielseitig durch bloßen Tausch der Temperierplatten für verschiedene Anwendungsfälle und Anwendungsformen nutzbar ist. Es müssen mithin nur die Temperierplatten erneuert oder aber ausgetauscht werden, nicht hingegen jedoch die gesamte Temperiervorrichtung. Hierdurch fallen nur einmalige Erstanschaffungskosten an, wobei durch die Austauschbarkeit der Temperierplatten aufwendige Umrüstarbeiten entfallen, wobei wiederum durch diese beiden Maßnahmen die Produktionskosten der Bauteile gering gehalten werden.

Die Temperierplatten erstrecken sich maßgeblich über die gesamte Fläche des Oberwerkzeuges und/oder des Unterwerkzeuges, so dass im Falle einer Platine ein bei schließender Temperiervorrichtung einstellender Formhohlraum zwischen den Temperierplatten maßgeblich die gesamte Platine abdeckt.

Weiterhin bevorzugt sind die Temperierplatten flächig zur Temperierung einer Blechplatine ausgebildet oder aber dreidimensional ausgebildet, wobei zwischen den Temperierplatten bei geschlossener Temperierstation ein Formhohlraum verbleibt. Im Falle von flächig ausgebildeten Temperierplatten ist es somit möglich, eine Blechplatine durch oberseitigen Kontakt mit der Temperierplatte am Oberwerkzeug und unterseitigen Kontakt mit der Temperierplatte am Unterwerkzeug konduktiv zu temperieren, insbesondere zu Erwärmen.

Als dritte Alternative ist es weiterhin möglich, dass bereits vorgeformte Bauteile durch die dreidimensional ausgebildeten Temperierplatten erwärmt werden, wobei der Formhohlraum zwischen den Temperierplatten der geschlossenen Temperierstation im Wesentlichen der Kontur des bereits vorgeformten Bauteiles entspricht. Hierbei ist es weiterhin vorteilig, dass das Bauteil während der konduktiven Temperierung zentriert und somit fest gehalten ist, wodurch Verzug vermieden wird.

Weiterhin bevorzugt ist in dem Oberwerkzeug und/oder in dem Unterwerkzeug eine Temperierquelle angeordnet. Hierbei ist die Temperierquelle insbesondere als elektrische Widerstandserwärmungsquelle oder aber als Brenner oder aber auch als induktive Wärmequelle ausgebildet. Die Temperierquelle ist dabei in das Oberwerkzeug bzw. in das Unterwerkzeug integriert oder aber an diesem angeordnet, so dass durch Austauschen der Temperierplatte eine Erwärmung vorzugsweise nahezu ausschließlich der Temperierplatte selbst erfolgt. Hierdurch wird die notwendige Energie zur Erwärmung des Bauteils auf das Wesentliche reduziert, so dass durch den zumindest bereichsweisen vollflächigen Kontakt eine schnelle und effiziente Temperierung insbesondere Erwärmung der Blechplatine und/oder des Bauteils erfolgt. Im Falle einer elektrischen Widerstandserwärmung ist die Temperierplatte in einer ersten Ausführungsvariante besonders bevorzugt derart ausgebildet, dass die Temperierplatte selbst als elektrischer Widerstand ausgebildet ist, wobei durch Anlegen einer Spannung sich maßgeblich ausschließlich die Temperierplatte erwärmt, nicht jedoch das Oberwerkzeug bzw. Unterwerkzeug. Als Alternative dazu ist eine elektrische Widerstandserwärmungsquelle derart an dem Oberwerkzeug bzw. Unterwerkzeug angeordnet, wobei durch Koppelung mit der Temperierplatte eine Erwärmung der Temperierplatte über die elektrische Widerstandswärmequelle erfolgt.

Im Falle eines Brenners wird dieser vorzugsweise mit fossilen Brennstoffen betrieben, wobei der Brenner bevorzugt derart im Oberwerkzeug bzw. Unterwerkzeug angeordnet ist, dass seine Flamme auf die zu koppelnden Temperierplatten gerichtet ist. Entsprechende Zuluft und Abluft für die Verbrennung sind dann in dem Oberwerkzeug bzw. Unterwerkzeug integriert.

Im Rahmen der Erfindung ist es ebenfalls möglich, den Brenner als Strahlrohr auszubilden, der dann von einer Rückseite die Temperierplatten temperiert,

Eine weitere bevorzugte Ausführungsvariante sieht die induktive Erwärmung vor, wobei entsprechende Induktionsmittel an oder aber in dem Oberwerkzeug bzw. Unterwerkzeug integriert sind, so dass über die Induktionsmittel eine Temperierung, insbesondere Erwärmung, der Temperierplatte erfolgt, wobei diese ihre Temperatur bzw. Wärme wiederum mittels Wärmeleitung bei Kontakt mit einer zu erwärmenden Platine oder aber einem Bauteil weitergibt. Alternativ dazu kann die Temperierplatte zumindest abschnittsweise zum Kühlen genutzt werden, wobei dann zwischen Oberwerkzeug und Temperierplatte sowie Unterwerkzeug und Temperierplatte ein Kanal ausgebildet ist, dass hierdurch eine Kühlmittelzufuhr gegeben ist, so dass das Kühlmittel die Temperierplatte entsprechend kühlt. Durch den konduktiven Kontakt zwischen zu kühlender Platine oder aber Bauteil wird dann eine Kühlung dieser vorgenommen. Unter Kühlung der Platine oder des Bauteils ist im Rahmen der Erfindung insbesondere eine gezielte Einstellung einer Temperatur unterhalb oder auf deren Ausgangstemperatur aus der vorgelagerten Erwärmung zu verstehen, wobei für ein Halten der Temperatur in einem Bereich zweiter Art nur die durch Wärmeleitung innerhalb der Platine bzw. des Bauteils erforderliche Wärme abgeführt wird, während zum Reduzieren der Bauteiltemperatur die Temperierplatte auf eine niedrigere Temperatur eingestellt wird.

Im Rahmen der Erfindung kann die Temperierung auch mittels heißer Luft bzw. Heißluft erfolgen. Dabei können dann in den Temperierplatten entsprechende Kanäle ausgebildet sein, durch die die heiße Luft strömt bzw. von einem Kompressor oder aber Gebläse geblasen wird. Im Rahmen der Erfindung können die Temperierplatten jedoch auch an ihrer Unterseite mittels heißer Luft überströmt werden und somit eine Temperatureinstellung in der Temperierplatte vorgenommen werden.

Die Temperierung selber erfolgt dabei in der erfindungsgemäßen Temperierstation derart, dass Bereiche erster Art und Bereiche zweiter Art mit voneinander unterschiedlichen Temperaturen temperiert werden. Hierzu weisen die Bereiche erster Art einen unmittelbaren Kontakt mit den Temperierplatten bei geschlossener Temperierstation auf und in den Bereichen zweiter Art zwischen der Bauteiloberfläche der zu erwärmenden Platine oder aber des Bauteils und der Temperierplatte ist ein Abstand ausgebildet, so dass ein Luftspalt entsteht oder aber in der Temperierplatte ist in den Bereichen zweiter Art ein Isolierwerkstoff angeordnet. Hierdurch wird es ermöglicht, dass Bereiche erster Art direkt und unmittelbar durch den konduktiven Anlagenkontakt temperiert, insbesondere erwärmt werden. Vorzugsweise weisen hierzu die Temperierplatten Temperaturen von bis zu mehr als 1000°C, insbesondere zwischen 100°C und 1500°C auf, so dass bei konduktivem Anlagenkontakt eine Temperatur oberhalb der Austentinisierungstemperatur, mithin oberhalb der AC3 Temperatur, in den Bereichen erster Art der Platine oder aber des zu erwärmenden Bauteils realisierbar ist.

Durch den Abstand zwischen der Bauteiloberfläche und einer Oberfläche der Temperierplatte in den Bereichen zweiter Art erfolgt eine Isolierung bzw. ein Wärmeübergang durch Wärmeleitung wird aufgrund des Luftspaltes unterbunden. Hierdurch werden die Bereiche zweiter Art in zu vernachlässigender Weise temperiert bzw. im Falle einer vorerwärmten Platine oder aber eines vorerwärmten Bauteils an die Bereiche zweiter Art im Wesentlichen auf der vorerwärmten Temperatur gehalten. Damit eventuelle Wärmestrahlung in den Luftspalt in den Bereichen zweiter Art unterbunden wird, ist in einer bevorzugten Ausführungsvariante ein Isolierwerkstoff in den Temperierplatten angeordnet. Dabei kann es sich beispielsweise um einen keramischen Isolierwerkstoff oder aber einen anderweitigen Isolierwerkstoff handeln. Im Rahmen der Erfindung ist es ebenfalls möglich, dass die Temperierplatte einen kombinierten Erwärmungs- und Abkühlvorgang in zwei voneinander verschiedenen Bereichen gleichzeitig durchführt. Ein Bereich erster Art wird somit erwärmt, oder aber zumindest auf seiner Temperatur gehalten durch eine Wärmequelle, wobei ein Bereich zweiter Art demgegenüber gekühlt wird. Im Rahmen der Erfindung ist es weiterhin vorteilhaft, wenn zur Verbesserung des Wärmeleiteffektes bei der konduktiven Temperierung eine Wärmeleitpaste zumindest auf die Bereiche erster Art aufgetragen wird.

Im Rahmen der Erfindung ist jedoch auch möglich, eine Wärmeleitpaste zwischen dem jeweiligen Oberwerkzeug oder Unterwerkzeug und der Temperierplatte aufzutragen.

Im Rahmen der Erfindung wird insbesondere ein härtbarer Stahl verarbeitet, insbesondere ein Bohrmanganstahl mit guten Warmform- und Vergütungseigenschaften.

Besonders bevorzugt wird härtbarer Stahl bei dem erfindungsgemäßen Verfahren verwendet, der als mikrolegierter Vergütungsstahl einzustufen ist. Dieser weist insbesondere folgende Legierungselemente als Massengewichtsprozentanteile auf:

| | | |
|---|---|---|
| Kohlenstoff | (C) | 0,19 bis 0,25% |
| Silizium | (Si) | 0,15 bis 0,30% |
| Mangan | (Mn) | 1,10 bis 1,40% |
| Phosphor | (P) | 0 bis 0,025% |
| Schwefel | (S) | 0 bis 0,015% |
| Chrom | (Cr) | 0 bis 0,35% |
| Molybdän | (Mo) | 0 bis 0,35% |
| Titan | (Ti) | 0,020 bis 0,050% |
| Bor | (B) | 0,002 bis 0,005% |
| Aluminium | (Al) | 0,02 bis 0,06% |

| | | |
|---|---|---|
| Rest Eisen und erschmelzungsbedingte Verunreinigungen. | | |

Alternativ dazu ist es auch möglich, eine Stahllegierung zu verwenden, die nachfolgende Legierungsbestandteile, ausgedrückt in Massengewichtsprozent, aufweist:

| | |
|---|---|
| Kohlenstoff (C) | 0,14 - 0,3% |
| Mangan (Mn) | 0,8 - 2,5% |
| Silizium (Si) | 1,5 - 2,5% |
| Chrom (Cr) | max.0,4% |
| Aluminium (Al) | max. 0,1% |
| Nickel (Ni) | max.0,3% |
| Bor (B) | 0,0008 - 0,005% |
| Titan (Ti) | 0,005 - 0,1% |
| Niob (Nb) | max.0,1 % |

| | |
|---|---|
| Rest Eisen und erschmelzungsbedingte Verunreinigungen. | |

Um die Temperierstation möglichst universell und einem breiten Einsatzspektrum unterziehen zu können, ist sie derart ausgebildet, dass eine Temperierplatte mit dem Oberwerkzeug sowie eine Temperierplatte mit dem Unterwerkzeug gekoppelt ist, wobei die Temperierplatten universell für jeden Anwendungsfall austauschbar sind. Besonders bevorzugt sind die Temperierplatten dazu formschlüssig an dem Oberwerkzeug und/oder an dem Unterwerkzeug gekoppelt, vorzugsweise erfolgt eine Sicherung über Bolzen. Hierdurch ist es in besonders kurzer Rüstzeit möglich, die Temperierstation adaptiv an den jeweiligen Anwendungsfall anzupassen und bei Umstellung der Warmformlinie auf ein neues Produkt ausschließlich die Temperierplatten neu hergestellt werden müssen, nicht jedoch die Temperierstation mit einer aufwendigen Schließmechanik sowie den kostenintensiven Temperier-quellen.

Die erfindungsgemäße Warmformlinie ist in einer weiteren bevorzugten Ausführungsvariante derart aufgebaut, dass der Temperierstation ein Ofen vorgeschaltet ist, wobei die Platinen und/oder Bauteile mithin die Metallbauteile in dem Ofen insbesondere homogen auf eine Temperatur vorerwärmt werden. Beispielsweise erfolgt diese Vorerwärmung auf eine Temperatur oberhalb von AC1, jedoch unterhalb von AC3, wobei dann eine weitere Erwärmung innerhalb der Temperierstation von zumindest Bereichen erster Art auf eine Temperatur über AC3 erfolgt, wobei Bereiche zweiter Art beispielweise auf dem Temperaturniveau zwischen AC1 und AC3 gehalten werden.

Bevorzugt sind auf der Temperierplatte auf dem Unterwerkzeug Abstandhalter angeordnet, wobei eine auf der Temperierplatte abgelegte Platine oder aber ein Bauteil durch die Abstandhalter insbesondere in den Bereichen zweiter Art abgestützt werden, so dass es hier zu keinem konduktiven Kontakt zwischen Temperierplatte und Bauteiloberfläche kommt. Ferner ist insbesondere bei einem über den gesamten Rand eines Bauteils verlaufenden Bereich zweiter Art die Gefahr unterbunden, dass die Blechplatine bei dem Einlegen in die Temperierstation umkippt und somit ungewollt in Kontakt mit der Temperierplatte kommt.

Weiterhin bevorzugt weist die Temperierplatte eine Beschichtung auf. Bei der Beschichtung handelt es sich insbesondere um eine zunderfeste Beschichtung, so dass ein Verrußen, Verdrecken oder aber auch Verzundern der Oberfläche der Temperierplatte maßgeblich unterbunden ist und somit die Betriebskosten der erfindungsgemäßen Temperierstation gering gehalten werden. Weiterhin kann die Beschichtung insbesondere derart hitzefest ausgebildet werden, dass ein Einbacken oder aber Ankleben von Beschichtungen der Platine oder aber des Bauteils selber oder aber einer Wärmeleitpaste unterbunden werden. Ferner ist die Beschichtung derart ausgebildet, dass sie verschleißfest ist, so dass die Temperierplatte insbesondere über den Zyklus einer Produktserie mit zu vernachlässigbaren Verschleißerscheinungen einsetzbar ist.

Im Rahmen der Erfindung ist es weiterhin möglich, dass die Platine oder aber das Bauteil selbst beschichtet sind, beispielsweise durch eine Aluminium-Silizium-Beschichtung oder aber auch eine Zinkbeschichtung, wobei die Beschichtung entweder im Ofen bereits sich fest mit der Bauteiloberfläche verbindet oder aber die Beschichtung selber während des Temperiervorganges in der Temperierstation sich fest mit der Bauteiloberfläche verbindet.

Mit der erfindungsgemäßen Warmformlinie kann ein Verfahren zur Herstellung eines warmumgeformten und pressgehärteten Kraftfahrzeugbauteils durchgeführt werden, wobei das Verfahren durch folgende Verfahrensschritte gekennzeichnet ist:
- Erwärmen einer Platine auf eine Temperatur unter AC3,
- Transfer der Platine in eine Temperierstation,
- Erwärmen Bereiche erster Art in der Temperierstation mittels konduktiver Erwärmung auf über AC3,
- Halten Bereiche zweiter Art auf einer Temperatur unter AC3,
- Transfer der Blechplatine in ein Umformwerkzeug, Umformen und Presshärten.

Demnach wird eine Platine zunächst homogen auf eine Temperatur unter AC3 erwärmt, wobei dies vorzugsweise in einem Ofen stattfindet. Die so vorerwärmte Platine wird anschließend in die erfindungsgemäße Temperierstation transferiert, wobei durch konduktive Erwärmung innerhalb der Temperierstation Bereiche erster Art auf eine Temperatur über AC3 erwärmt werden, wobei Bereiche zweiter Art im Wesentlichen auf einer Temperatur unter AC3, insbesondere auf eine Temperatur auf die das Bauteil zunächst erwärmt wurde, gehalten werden. Dabei werden Übergangsbereiche zwischen den Bereichen erster Art und den Bereichen zweiter Art innerhalb 30 mm, insbesondere kleiner als 20 mm realisiert.

Im Anschluss an die Temperierung innerhalb der Temperierstation wird die so wärmebehandelte Blechplatine in ein Umformwerkzeug transferiert, in dem Umformwerkzeug warmumgeformt und durch anschließendes rasches Abkühlen pressgehärtet. Hierdurch wird ein Bauteil hergestellt, das mindestens zwei Bereiche mit voneinander verschiedenen Festigkeitseigenschaften und/oder Duktilitäts-eigenschaften aufweist, wobei zwischen den Bereichen ein klar definierterinsbesondere kleiner Übergangsbereich von weniger als 30 mm, besonders bevorzugt weniger als 20 mm ausgebildet ist. Durch die gezielte Temperierung mit der erfindungsgemäßen Temperierstation ist es ferner möglich, die Bauteile energetisch optimal und gezielt auf Temperaturen von bis zu mehr als 900°C zu erwärmen, so dass etwaige Verlustwärme während der Temperierung weitestgehend vermieden wird.

Weiterhin kann mit der erfindungsgemäßen Vorrichtung ein Verfahren mit folgenden Verfahrensschritten durchgeführt werden:
- Erwärmen einer Platine auf eine Temperatur größer gleich AC3,
- Transfer der Platine in eine Temperierstation,
- Kühlen Bereiche zweiter Art auf eine Temperatur unter AC3,
- Halten Bereiche erster Art auf einer Temperatur oberhalb AC1, insbesondere oberhalb AC3 und
- Transfer der so temperierten Blechplatine in ein Umformwerkzeug, Warmumformen und Presshärten.

Im Rahmen der Erfindung ist es ferner möglich, dass die Platine zunächst auf unter AC1 erwärmt wird, wobei der Bereich zweiter Art in der Temperierstation selbst auf eine Temperatur unter AC1 gehalten wird. Alternativ dazu kann auch das Bauteil zunächst auf unter AC1 erwärmt werden, mithin auf eine Temperatur von 500 oder 600°C, so dass der Energieeinsatz zur Vorerwärmung nur gering ist und anschließend gezielt durch die konduktive Erwärmung in der erfindungsgemäßen Temperierstation eine Nacherwärmung erfolgt.

Weitere Vorteile, Merkmale, Eigenschaften und Aspekte der vorliegenden Erfindung sind Bestandteil der nachfolgenden Beschreibung. Bevorzugte Ausführungsvarianten werden in den schematischen Figuren dargestellt. Diese dienen dem einfachen Verständnis der Erfindung. Es zeigen:
- Figur 1: eine erfindungsgemäße Warmformlinie,
- Figur 2: den Zeittemperaturverlauf der Erwärmung mit einer erfindungsgemäßen Warmformlinie,
- Figur 3a und b: einen Querschnitt durch eine erfindungsgemäße Temperierstation,
- Figur 4: eine erfindungsgemäße Temperierstation mit Abstandhalter,
- Figur 5: eine erfindungsgemäße Temperierplatte mit zwei aufgelegten zu temperierenden Platinen und
- Figur 6a und: b eine Draufsicht und eine Seitenansicht auf eine Temperierplatte mit Dickensprung.

In den Figuren werden für gleiche oder ähnliche Bauteile dieselben Bezugszeichen verwendet, auch wenn eine wiederholte Beschreibung aus Vereinfachungsgründen entfällt.

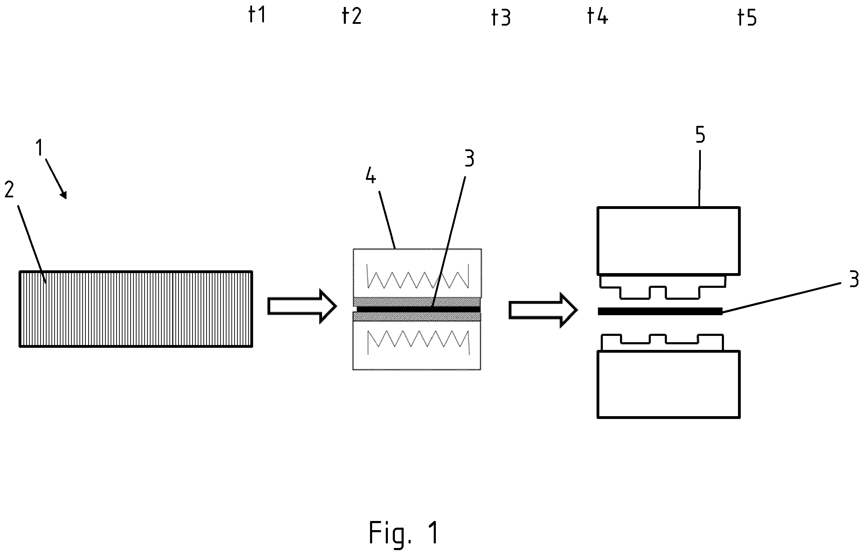

Figur 1 zeigt eine erfindungsgemäße Warmformlinie 1, wobei die Warmformlinie 1 einen Ofen 2 zur homogenen Erwärmung einer Platine 3 aufweist. Die Platine 3 wird nach der Erwärmung in dem Ofen in eine erfindungsgemäße Temperierstation 4 zur hier dargestellten gezielten lokalen Nacherwärmung transferiert. Nach Abschluss der Temperierung in der Temperierstation 4 wird die Platine 3 weiterhin in ein Umformwerkzeug 5 transferiert, wobei sie in dem Umformwerkzeug 5 warm umgeformt und anschließend abgeschreckt und dadurch pressgehärtet wird.

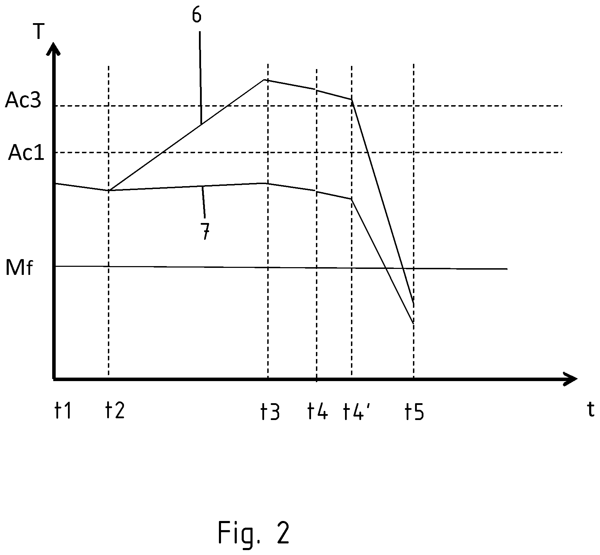

Ferner sind mit Bezug auf Figur 2 verschiedene Zeitpunkte t1 bis t5 dargestellt, an denen die Platine 3 die unterschiedlichen Stationen der Warmformlinie 1 durchläuft und entsprechende Temperaturen aufweist. Hierzu beginnt das Bauteil bzw. die Platine 3 zum Zeitpunkt t1 bei einer Temperatur unterhalb der AC1 Temperatur. Mit Transfer in die Temperierstation 4 erfolgt ab Beginn der Temperierung in der Temperierstation 4 zum Zeitpunkt t2 eine Erwärmung Bereiche erster Art auf eine Temperatur oberhalb der AC3 Temperatur, was durch die Kurve 6 dargestellt ist. Bereiche zweiter Art, die durch die Kurve 7 dargestellt sind, bleiben im Wesentlichen auf der nach Austritt aus dem Ofen 2 vorliegenden Temperatur.

Zum Zeitpunkt t3 ist die Erwärmung in der Temperierstation 4 beendet und die Platine 3 wird in ein Umformwerkzeug 5 transferiert. Dieser Transfervorgang ist zum Zeitpunkt t4 abgeschlossen. Im Anschluss daran erfolgt eine Umformung, wobei durch den Kontakt mit dem Umformwerkzeug 5 bereits eine geringfügige Abkühlung beider Bereiche erfolgt. Zum Zeitpunkt t4' beginnt der Abschreckvorgang innerhalb des Umformwerkzeuges 5 und die Temperatur wird in den Bereichen erster Art von über AC3 und in den Bereichen zweiter Art 7 von unter AC1 derart abgekühlt, dass sich in den Bereichen erster Art ein im Wesentlichen martensitisches Gefüge ausbildet und in den Bereichen zweiter Art hierzu ein duktileres Gefüge. Dies kann beispielsweise ein ferritisch-perlitisches oder aber ein ferrit-perlitisches-martensitisches Gefüge sein. Der Abkühlvorgang ist zum Zeitpunkt t5 beendet und das fertig geformte und pressgehärtete Bauteil wird aus dem Umformwerkzeug entnommen.

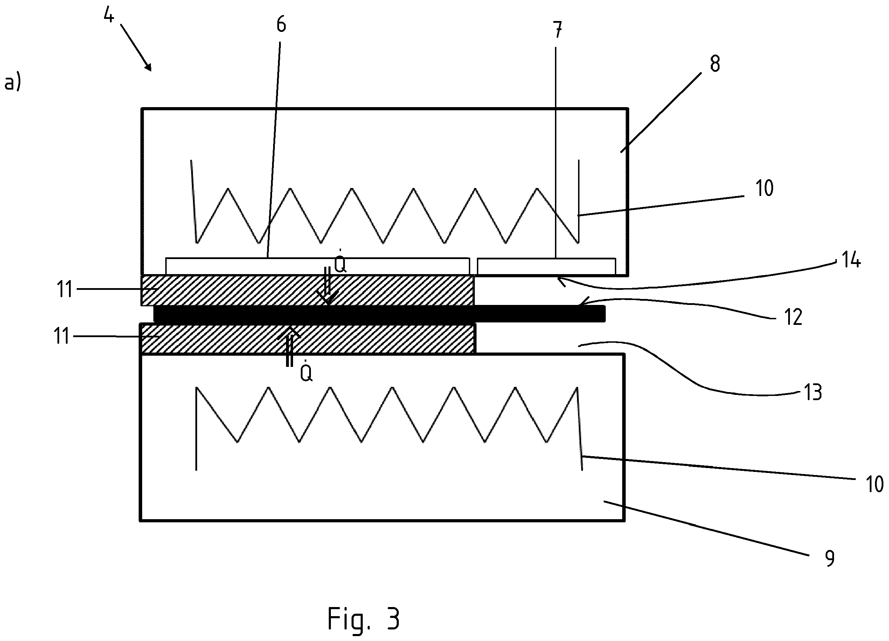

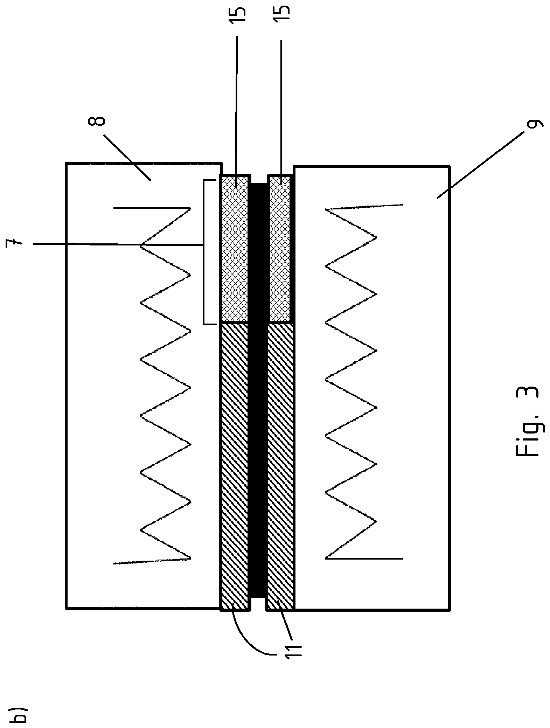

Figur 3a und b zeigt dazu eine Querschnittsansicht durch eine erfindungsgemäße Temperierstation 4, wobei die Temperierstation 4 ein Oberwerkzeug 8 und ein Unterwerkzeug 9 aufweist und in dem Oberwerkzeug 8 und in dem Unterwerkzeug 9 jeweils eine Temperierquelle 10, hier dargestellt in Form einer Widerstandserwärmungsvorrichtung, aufweist. Ferner weist die Temperiervorrichtung 4 in Bereichen erster Art 6 eine Temperierplatte 11 an dem Oberwerkzeug 8 und auch eine Temperierplatte 11 an dem Unterwerkzeug 9 auf. Mit Hilfe der Temperierplatten 11 erfolgt ein Wärmeübergangs *Q̇* über Konduktion von der Temperierquelle 10 über die Temperierplatte 11 auf die Bauteiloberfläche und mithin in die Platine 3 hinein. In Bereichen zweiter Art 7 ist hingegen ein Luftspalt 13 zwischen der Bauteiloberfläche 12 sowie einer Werkzeugoberfläche 14 ausgebildet, so dass es hier im Wesentlichen zu keinem Wärmeübergang *Q̇* bzw. Wärmeeintrag in den Bereich zweiter Art 7 kommt.

Figur 3b zeigt dazu eine analoge Ausführungsvariante, wobei in den Bereichen zweiter Art 7 zwischen den jeweiligen Oberwerkzeug 8 oder aber Unterwerkzeug 9 und der Bauteiloberfläche der Platine 3 jeweils eine Isolierplatte 15 eingegliedert ist, die gegebenenfalls gegenüber der in Figur 3a gezeigten Ausführungsvariante auch einen Wärmeeintrag in Folge von Wärmestrahlung verhindert.

Erfindungsgemäß sind die Temperierplatten 11 austauschbar, so dass das Oberwerkzeug 8 und das Unterwerkzeug 9 der Temperierstation 4 universell verwendet werden können und durch bloßen Austausch der Temperierplatten 11 einem breiten Einsatzspektrum zugänglich sind, so dass die Anschaffungskosten für Werkzeuge gering gehalten werden.

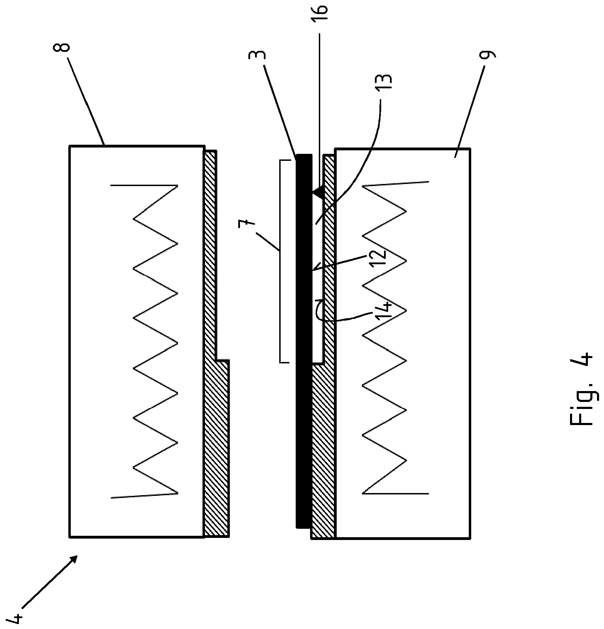

Im Anwendungsfall von Figur 4 ist zusätzlich in den Bereichen zweiter Art 7, in denen ein Luftspalt 13 zwischen Bauteiloberfläche 12 und Werkzeugoberfläche 14 ausgebildet ist, ein Abstandshalter 16 angeordnet, so dass zum einen die Bauteiloberfläche der Platine 3 im Bereich zweiter Art 7 nicht mit der Werkzeugoberfläche 14 in Kontakt gerät, zum anderen jedoch auch verhindert wird, dass die Platine 3 beim Schließen von Oberwerkzeug 8 und Unterwerkzeug 9 derart umkippt, dass die Produktionstoleranzen einer hohen Schwankung unterliegen würden.

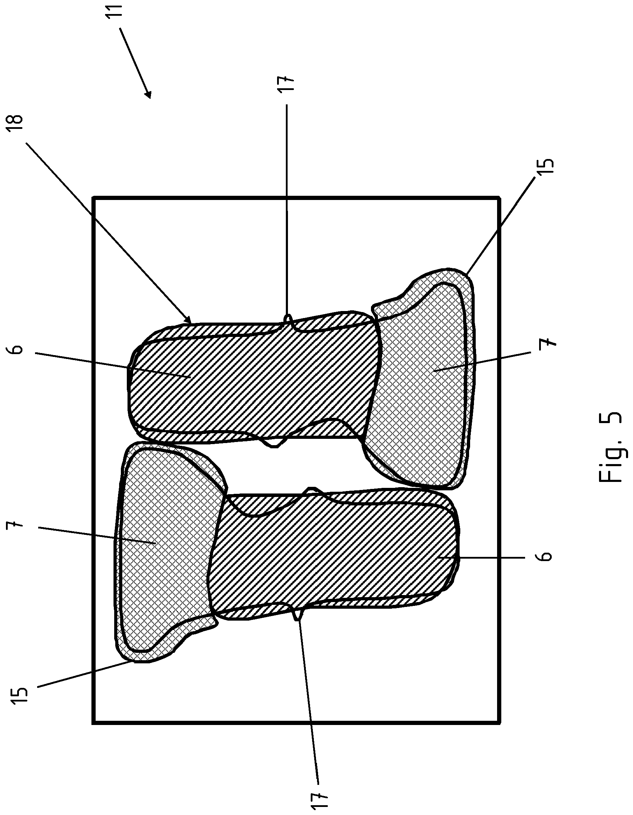

Figur 5 zeigt eine Temperierplatte 11 in einer Draufsicht mit aufgelegten Blechzuschnitten 17. Die Temperierplatte 11 ist dabei derart ausgebildet, dass in Bereichen zweiter Art 7 Isolierplatten 15 angeordnet sind und in Bereichen erster Art 6 die Temperierplatten 11 derart ausgebildet sind, dass sie mit den Bereichen erster Art 6 im Wesentlichen vollflächig konduktiv zur Anlage kommen. Dabei kommt es in Randbereichen 18, wie in Figur 5 schematisch angeordnet, nur zu geringfügigen Überschneidungen zwischen Rand des Bauteils sowie Rand des Kontakts zwischen Temperierplatte 11 und Bauteil sowie Isolierplatte 15, so dass der Energieeintrag in die Bauteile selbst im Rahmen der Erfindung möglichst effizient gestaltet ist und zu starke Verlustwärme, die beispielsweise an die Umgebungstemperatur abgegeben wird, vermieden wird.

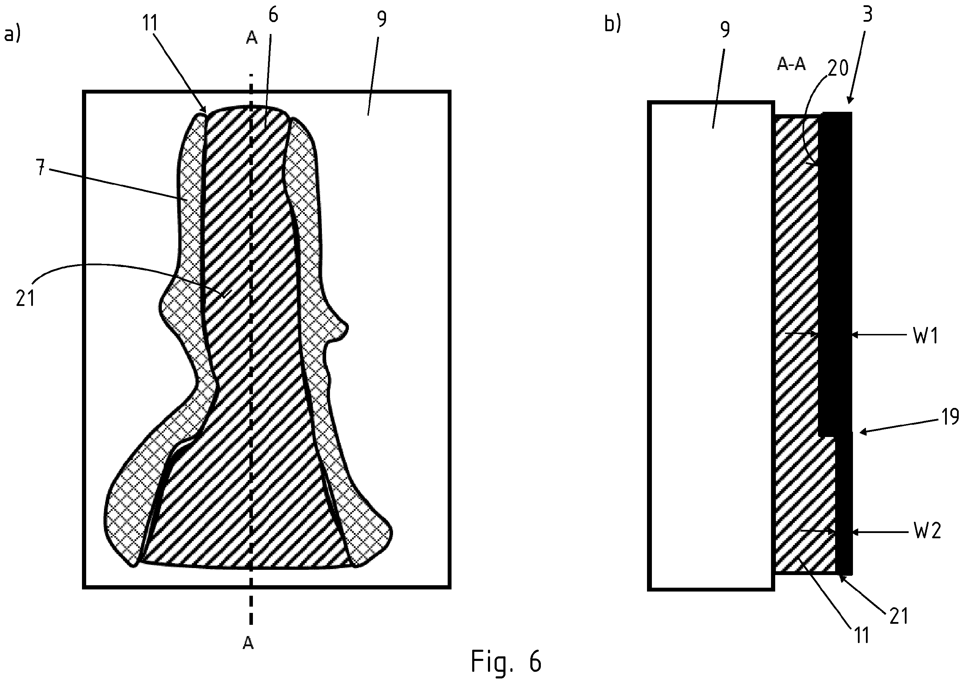

Figur 6a zeigt eine Temperierplatte 11 in einer Draufsicht auf einen Unterwerkzeug 9 ohne aufgelegte Platine. Die Temperierplatte 11 weist wiederum einen Bereich erster Art 6 sowie einen Bereich zweiter Art 7 auf, die voneinander verschieden temperierbar sind. Figur 6b zeigt eine Schnittansicht entlang der Linie A-A, jedoch mit aufgelegter Platine 3. Hierbei ist zu erkennen, dass die Platine 3 auf der Temperierplatte 11 aufliegt, wobei die Temperierplatte 11 selbst wiederum auf einem Unterwerkzeug 9 befestigt ist. Die Platine 3 selbst weist einen Dickensprung 19 auf, der spiegelsymmetrisch an der Temperierplatte 11 selbst ebenfalls ausgebildet ist. Somit kommt eine Unterseite 20 der Platine 3 selbst auf einer Oberfläche 21 der Temperierplatte 11 formschlüssig zur Anlage. Hierdurch ist es möglich, eine Platine 3 mit zwei voneinander verschiedenen Wandstärken W1, W2, wobei die Wandstärke W1 größer ist als die Wandstärke W2, um dem Dickensprung 19 selbst homogen zu erwärmen. Durch einfachen Tausch der Temperierplatte 11 kann somit die Temperierstation 4 in einfacher Art und Weise an eine jeweils zu erwärmende Platine 3 angepasst werden.

### Bezugszeichen:

- 1 -: Warmformlinie
- 2 -: Ofen
- 3 -: Platine
- 4 -: Temperierstation
- 5 -: Umformwerkzeug
- 6 -: Bereich erster Art
- 7 -: Bereich zweiter Art
- 8 -: Oberwerkzeug
- 9 -: Unterwerkzeug
- 10 -: Temperierquelle
- 11 -: Temperierplatte
- 12 -: Bauteiloberfläche
- 13 -: Luftspalt
- 14 -: Werkzeugoberfläche
- 15 -: Isolierplatte
- 16 -: Abstandhalter
- 17 -: Blechzuschnitte
- 18 -: Randbereich
- 19 -: Dickensprung
- 20 -: Unterseite zu 3
- 21 -: Oberfläche zu 11

- *Q̇* -: Wärmeübergang

## Patentansprüche

1. Warmformlinie (1) zur Herstellung warmumgeformter und pressgehärteter Stahlblechprodukte als Kraftfahrzeugbauteile, aufweisend eine Erwärmungsvorrichtung und eine Umformvorrichtung, wobei die Erwärmungsvorrichtung eine Temperierstation (4) mit einem Oberwerkzeug (8) und einem Unterwerkzeug (9) aufweist und an dem Oberwerkzeug (8) und/oder dem Unterwerkzeug (9) austauschbare Temperierplatten (11) zur konduktiven Temperierung angeordnet sind, wobei die Temperierplatten (11) durch eine Temperierquelle (10) der Temperierstation (4) erwärmbar oder kühlbar sind, **dadurch gekennzeichnet, dass** mit den Temperierplatten (11) Bereiche erster Art (6) und Bereiche zweiter Art (7) mit voneinander unterschiedlichen Temperaturen temperiert werden, wobei die Bereiche erster Art (6) einen unmittelbaren Kontakt mit den Temperierplatten (11) bei geschlossener Temperierstation (4) haben und in den Bereichen zweiter Art (7) zwischen der Bauteiloberfläche (12) und der Temperierplatte (11) oder der Werkzeugoberfläche (14) ein Abstand ausgebildet ist oder dass in den Temperierplatten (11) in den Bereichen zweiter Art (7) ein Isolierwerkstoff angeordnet ist.

2. Warmformlinie nach Anspruch 1, **dadurch gekennzeichnet, dass** die Temperierplatten (11) flächig zur Temperierung einer Blechplatine (3) ausgebildet sind oder dass die Temperierplatten (11) dreidimensional ausgebildet sind, wobei zwischen den Temperierplatten (11) bei geschlossener Temperierstation (4) ein Formhohlraum verbleibt.

3. Warmformlinie nach Anspruch 1 oder 2, **dadurch gekennzeichnet, dass** in dem Oberwerkzeug (8) und/oder in dem Unterwerkzeug (9) eine Temperierquelle (10) angeordnet ist.

4. Warmformlinie nach einem der vorhergehenden Ansprüche, **dadurch gekennzeichnet, dass** die Temperierquelle (10) eine elektrische Widerstandserwärmung oder ein Brenner oder ein Strahlrohr ist oder als induktive Wärmequelle oder als elektromagnetische Wärmequelle ausgebildet ist, wobei die Temperierplatte (11) auf über 1000 Grad Celsius erwärmbar ist oder dass als Temperierquelle Heißluft verwendet wird.

5. Warmformlinie nach einem der vorhergehenden Ansprüche, **dadurch gekennzeichnet, dass** die Temperierquelle (10) zum Heizen oder Kühlen ausgebildet ist.

6. Warmformlinie nach einem der vorhergehenden Ansprüche, **dadurch gekennzeichnet, dass** eine austauschbare Temperierplatte (11) formschlüssig über Bolzen mit dem Oberwerkzeug (8) und/oder eine austauschbare Temperierplatte (11) mit dem Unterwerkzeug (9) formschlüssig über Bolzen gekoppelt ist.

7. Warmformlinie nach einem der vorhergehenden Ansprüche, **dadurch gekennzeichnet, dass** der Temperierstation (4) ein Ofen (2) vorgeschaltet ist, wobei die Bauteile oder die Platinen (3) in dem Ofen (2) auf eine Temperatur vorerwärmbar sind.

8. Warmformlinie nach einem der Ansprüche 1 bis 7, **dadurch gekennzeichnet, dass** zumindest die Temperierplatte (11) auf dem Unterwerkzeug (9) Abstandhalter (16) aufweist, wobei die auf der Temperier-platte (11) abgelegte Platine (3) oder das Bauteil in den Bereichen zweiter Art (7) von dem Abstandhalter (16) abstützbar ist.

9. Warmformlinie nach einem der vorhergehenden Ansprüche, **dadurch gekennzeichnet, dass** die Temperierplatte (11) eine zunderfeste Beschichtung aufweist.

## Claims

1. Hot forming line (1) for producing heat-formed and press-hardened sheet steel products as motor vehicle components, having a heating device and a forming device, wherein the heating device has a temperature control station (4) having an upper tool (8) and a lower tool (9) and exchangeable temperature control plates (11) for the conductive temperature control are arranged on the upper tool (8) and/or on the lower tool (9), wherein the temperature control plates (11) can be heated or cooled by a temperature control source (10) of the temperature control station (4), **characterised in that** regions of a first type (6) and regions of a second type (7) at mutually different temperatures are temperature-controlled with the temperature control plates (11), wherein the regions of a first type (6) have direct contact with the temperature control plates (11) when the temperature control station (4) is closed and a spacing is formed in the regions of the second type (7) between the component surface (12) and the temperature control plate (11) or the tool surface (14), or **in that** an insulation material is arranged in the temperature control plates (11) in the regions of the second type (7).

2. Hot forming line according to claim 1, **characterised in that** the temperature control plates (11) are formed to be flat for the temperature control of a sheet metal blank (3) or **in that** the temperature control plates (11) are formed to be three-dimensional, wherein a mould cavity space remains between the temperature control plates (11) when the temperature control station (4) is closed.

3. Hot forming line according to claim 1 or 2, **characterised in that** a temperature control source (10) is arranged in the upper tool (8) and/or in the lower tool (9).

4. Hot forming line according to any one of the preceding claims, **characterised in that** the temperature control source (10) is an electrical resistance heating unit or a burner or a radiation tube or is constructed as an inductive heat source or as an electromagnetic heat source, wherein the temperature control plate (11) can be heated to above 1000° Celsius or **in that** hot air is used as the temperature control source.

5. Hot forming line according to any one of the preceding claims, **characterised in that** the temperature control source (10) is formed for heating or cooling.

6. Hot forming line according to any one of the preceding claims, **characterised in that** an exchangeable temperature control plate (11) is coupled in positive engagement via bolts to the upper tool (8) and/or an exchangeable temperature control plate (11) is coupled in positive engagement via bolts to the lower tool (9).

7. Hot forming line according to any one of the preceding claims, **characterised in that** a furnace (2) is arranged upstream of the temperature control station (4), wherein the components or blanks (3) can be preheated to a temperature in the furnace (2).

8. Hot forming line according to any one of claims 1 to 7, **characterised in that** at least the temperature control plate (11) has spacers (16) on the lower tool (9), wherein the blank (3) deposited on the temperature control plate (11) or the component can be supported by the spacer (16) in the regions of the second type (7).

9. Hot forming line according to any one of the preceding claims, **characterised in that** the temperature control plate (11) has a scale-resistant coating.

## Revendications

1. Ligne de formage à chaud (1) pour fabriquer des produits en tôle d'acier formés à chaud et durcis à la presse comme pièces de véhicule automobile, comportant un dispositif de chauffage et un dispositif de formage, dans laquelle le dispositif de chauffage comporte un poste de chauffe (4) avec un outil supérieur (8) et un outil inférieur (9) et dans laquelle des plaques de chauffe (11) interchangeables sont agencées sur l'outil supérieur (8) et/ou sur l'outil inférieur (9) en vue du chauffage par conduction, les plaques de chauffe (11) pouvant être chauffées ou refroidies par une source de chauffage (10) du poste de chauffe (4), **caractérisée en ce que** des zones d'un premier type (6) et des zones d'un deuxième type (7) avec des températures différentes l'une de l'autre sont chauffées avec les plaques de chauffe (11), les zones du premier type (6) ayant un contact direct avec les plaques de chauffe (11) lorsque le poste de chauffe (4) est à l'état fermé et une distance étant prévue dans les zones du deuxième type (7) entre la surface de pièce (12) et la plaque de chauffe (11) ou la surface d'outil (14), ou **en ce qu'**un matériau isolant est agencé dans les plaques de chauffe (11) dans les zones du deuxième type (7).

2. Ligne de formage à chaud selon la revendication 1, **caractérisée en ce que** les plaques de chauffe (11) sont planes pour le chauffage d'un flan de tôle (3) ou **en ce que** les plaques de chauffe (11) sont en trois dimensions, une cavité du moule subsistant entre les plaques de chauffe (11) lorsque le poste de chauffe (4) est à l'état fermé.

3. Ligne de formage à chaud selon la revendication 1 ou 2, **caractérisée en ce qu'**une source de chauffage (10) est agencée dans l'outil supérieur (8) et/ou dans l'outil inférieur (9).

4. Ligne de formage à chaud selon l'une des revendications précédentes, **caractérisée en ce que** la source de chauffage (10) est un chauffage par résistance électrique ou un brûleur ou un tube radiant ou est réalisée sous la forme d'une source de chaleur par induction ou sous la forme d'une source de chaleur électromagnétique, la plaque de chauffe (11) pouvant être chauffée au-delà de 1 000° Celsius, ou **en ce que** de l'air chaud est utilisé comme source de chauffage.

5. Ligne de formage à chaud selon l'une des revendications précédentes, **caractérisée en ce que** la source de chauffage (10) est réalisée pour le chauffage ou pour le refroidissement.

6. Ligne de formage à chaud selon l'une des revendications précédentes, **caractérisée en ce qu'**une plaque de chauffe (11) interchangeable est couplée à l'outil supérieur (8) par ajustement de forme par l'intermédiaire de boulons et/ou une plaque de chauffe (11) interchangeable est couplée à l'outil inférieur (9) par ajustement de forme par l'intermédiaire de boulons.

7. Ligne de formage à chaud selon l'une des revendications précédentes, **caractérisée en ce qu'**un four (2) est placé en amont du poste de chauffe (4), les pièces ou les flans (3) étant préchauffés à une certaine température dans le four (2).

8. Ligne de formage à chaud selon l'une des revendications 1 à 7, **caractérisée en ce qu'**au moins la plaque de chauffe (11) comporte des pièces de mise à distance (16) sur l'outil inférieur (9), le flan (3) posé sur la plaque de chauffe (11) ou la pièce pouvant être soutenu par la pièce de mise à distance (16) dans les zones du deuxième type (7).

9. Ligne de formage à chaud selon l'une des revendications précédentes, **caractérisée en ce que** la plaque de chauffe (11) comporte un revêtement résistant au calaminage.
